Europäisches Patentamt

European Patent Office

Office européen des brevets

(19)

(11) Veröffentlichungsnummer : **0 321 529 B1**

## (12) EUROPÄISCHE PATENTSCHRIFT

(45) Veröffentlichungstag der Patentschrift :
25.03.92 Patentblatt 92/13

(51) Int. Cl.⁵ : **G01B 11/02, G01B 11/24**

(21) Anmeldenummer : **88905763.4**

(22) Anmeldetag : **21.06.88**

(86) Internationale Anmeldenummer :
**PCT/EP88/00541**

(87) Internationale Veröffentlichungsnummer :
**WO 88/10406 29.12.88 Gazette 88/28**

(54) VORRICHTUNG ZUR MESSUNG VON ABSTÄNDEN ZWISCHEN EINEM OPTISCHEN ELEMENT MIT GROSSER CHROMATISCHER ABERRATION UND EINEM GEGENSTAND.

(30) Priorität : **26.06.87 CH 2427/87**

(43) Veröffentlichungstag der Anmeldung :
**28.06.89 Patentblatt 89/26**

(45) Bekanntmachung des Hinweises auf die
Patenterteilung :
**25.03.92 Patentblatt 92/13**

(84) Benannte Vertragsstaaten :
**DE FR GB IT**

(56) Entgegenhaltungen :
**EP-A- 0 142 464
GB-A- 2 144 537**

(56) Entgegenhaltungen :
**IEEE Transactions on Pattern Analysis and
Machine Intelligence, vol. PAMI-5, Nr. 2,
March 1983, IEEE, (New York, US), R.A. Jarvis:
"A perspective on range finding techniques
for computer vision", pages 122-139
IBM Technical Disclosure Bulletin, vol. 27, Nr.
12, May 1985, (New York, US), "Chromatic
Focusing Technique", pages 6850-6851
IBM Technical Disclosure Bulletin, vol. 16, Nr.
2, July 1973, (New York, US), J.R. Malin:
"Optical micrometer", pages 433-434**

(73) Patentinhaber : **Battelle-Institut e.V.
Am Römerhof 35 Postfach 900 160
W-6000 Frankfurt/Main 90 (DE)**

(72) Erfinder : **STRÄTER, Hans-Dieter
Hedderichstrasse 38
W-6000 Frankfurt 38 (DE)**
Erfinder : **GROSS, Daniel Dr.
40, rue des Acacias
CH-1227 Carouge (CH)**
Erfinder : **JAUCH, Karl, Martin
4, avenue du Lignon
CH-1219 Le Lignon (CH)**

## Beschreibung

Die vorliegende Erfindung bezieht sich auf eine Vorrichtung zur Messung von Abständen zwischen einem optischen Element mit großer chromatischer Aberration und einem Gegenstand und geht aus von einer Vorrichtung mit den Merkmalen im Oberbegriff des Patentanspruchs 1, wie sie aus der GB-A-2 144 537 bekannt ist. Man hat schon in der US-A-4,585,349 vorgeschlagen, die Entfernung eines Punktes der reflektierenden Oberfläche, der auf der optischen Achse der Meßvorrichtung liegt, optisch zu messen. Diese Messung basiert auf der Bündelung polychromatischen Lichtes, dessen jeweilige Bündelungsentfernung charakeristisch für die Wellenlängen ist. Durch Auffangen des Lichtes, das von dem auf der optischen Achse gelegenen Teil der zu messenden Oberfläche reflektiert wird, mißt man ein Intensitätsmaximum für die Wellenlänge, die , charakteristisch für die Entfernung dieses Teils der reflektierenden Oberfläche ist. Um diese Messung durchzuführen, leitet man das reflektierte Licht auf ein Beugungsgitter, das es nach seinen verschiedenen Wellenlängen streut, und man ermittelt mit Hilfe einer Reihe optischer Meßzellen, welches die Wellenlänge mit der größten empfangenen Lichtintensität ist. Der Brennpunktabstand dieser Wellenlänge entspricht der Entfernung zwischen der holographischen Linse zur Fokussierung des polychromatischen Lichtes und der reflektierenden Oberfläche. Diese Lösung ermöglicht zwar die Messung der Entfernung eines Punktes, aber nicht die Profilabbildung der Oberfläche, was ihren Anwendungsbereich ganz erheblich begrenzt.

Ferner ist ein herkömmliches optisches Tiefenmeßverfahren bekannt, das auf der Wirkung der Parallaxe oder der Triangulation beruht, wobei ein Lichtbündel auf ein Objekt projiziert wird. Ein Detektor beobachtet diesen Punkt oder diese beleuchtete Linie unter verschiedenen Winkeln. Die Wirkung der Parallaxe ermöglicht die Berechnung der Entfernung der Oberfläche oder ihres Profils. Der nachteil dieses Verfahrens besteht darin, daß entweder der Lichtwinkel oder der Beobachtungswinkel oder beide schief sein müssen, so daß die Tiefe der Löcher oder Rillen, die beobachtet werden können, begrenzt ist.

Eine Vorrichtung, mit der ohne Bewegung von Sensor oder Prüfung von diesem ein Profil abgenommen werden kann, ist aus der eingangs erwähnten GB-A-2 144 537 bekannt. Dort wird mit Hilfe eines halbdurchlässigen Spiegels das an der Gegenstandsoberfläche reflektierte und durch ein optisches Element mit chromatischer Aberration in Form einer Linsenkombination gebündelte Licht auf eine spektraldispersive Apparatur mit Prisma oder Gitter umgelenkt, die sich oberhalb einer Empfangsoberfläche aus Fotodioden befindet. Das für die Abbildung benutzte weiße Licht stammt von einer Lichtquelle mit schlitzförmigem Spalt und wird durch eine Kollimatorlinse und den halbdurchlässigen Spiegel auf das optische Element gerichtet.

Der Erfindung liegt die Aufgabe zugrunde, eine verbesserte Vorrichtung der eingangs erwähnten Art anzugeben. Diese Aufgabe ist durch die im Anspruch 1 aufgeführten Merkmale gelöst. Hierdurch ist es auf einfache Weise möglich, ohne mechanische Bewegung mehrere Messungen an verschiedenen Orten des Prüflings gleichzeitig durchzuführen und damit lineare Profilschnitte zu generieren. Die Vorrichtung ist einfach, benötigt keinen Umlenkspiegel und kann durch die Anordnung des transparenten Beugungsgitters unmittelbar auf der als das optische Element dienenden Linse kostengünstig und kompakt aufgebaut werden. Das die spektraldispersive Apparatur aus dem Stand der Technik ersetzende transparente Beugungsgitter, das etwa halb so groß wie das optische Element ist, streut das an der Oberfläche reflektierte Licht gemäß den für die unterschiedlichen Wellenlängen charakeristischen Winkeln, wobei die seitlichen Ablenkungen für die Entfernungen der verschiedenen Teile des Profils entlang der optischen Achse charakteristisch sind. Die Lichtpunkte der Lichtquelle können gemäß Anspruch 4 unterschiedlichen Abstand zur Hauptebene aufweisen, um dadurch eien vergrößerten Meßbereich oder eine höhere Meßgenauigkeit zu erhalten. In vorteilhafter Weise ergeben mehrere Lichtpunkte einen Lichtstreifen.

Durch die Anordnung gemäß der Ansprüche 5 und 6 lassen sich dem Prüfling angepaßte Kontroll- oder Meßpunkte, die ein gewünschtes Meßraster bilden können, definieren. Dadurch wird die Meßzeit minimiert. Durch die Verwendung von mehreren parallelen Lichtstreifen werden sehr viele Meßpunkte gleichzeitig erfaßt und somit eine flächenmäßige Abdeckung des Prüflings erreicht.

Die alternative Verwendung von Glaslinse und Zonenplatte ergibt einen über weite Bereiche variierbaren Meßbereich.

Im folgenden wird die Erfindung anhand der Zeichnungen näher erläutert.

Es zeigen:

Fig. 1 die prinzipielle Darstellung einer bekannten Vorrichtung zur Messung eines linearen Profilschnittes;

Fig. 2 ein Ausführungsbeispiel der erfindungsgemäßen Vorrichtung;

Fig. 3 eine Abwandlung der bekannten Vorrichtung aus Fig. 1 einer Lichtquelle mit zwei Lichtpunkten.

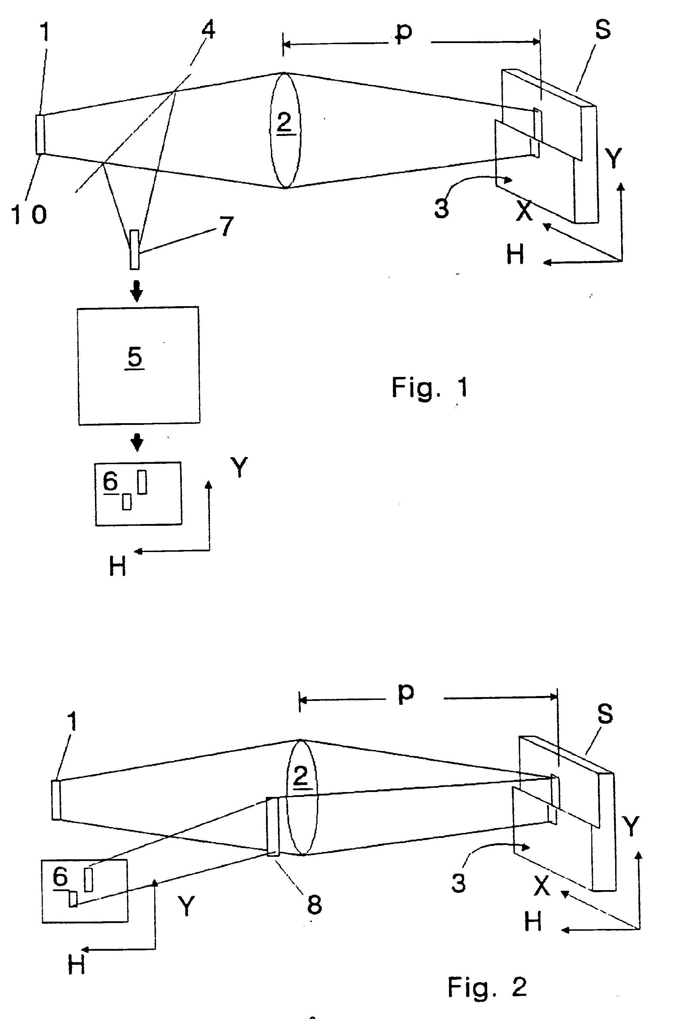

In Fig. 1 wird eine polychromatische, streifenförmige Lichtquelle 1 mit breitem Spektrum gezeigt. Dieses Licht wird auf eine chromatische Linse 2 geleitet, die dazu dient, das Licht in Abhängigkeit von seinen verschiedenen Wellenlängen zu bündeln. Die zu vermessende reflektierende Oberfläche 3 wird in einer Entfernung p von der Linse 2 angebracht. Auf dieser Oberfläche 3 entsteht ein Bild, welches in jedem beleuchteten Punkt

2

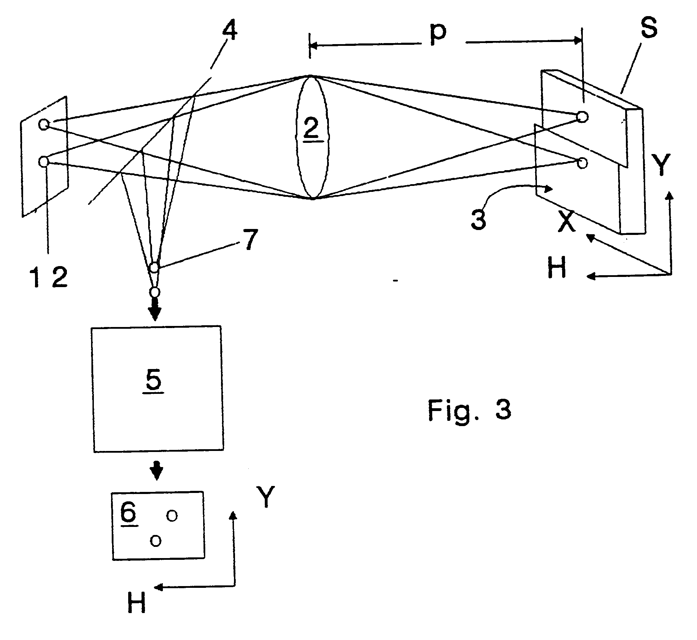

jeweils für eine Farbe scharf abgebildet ist, abhängig von der Entfernung der einzlenen Oberflächenpunkte von der Linse 2. Das gestreute Licht wird mit der chromatischen Linse 2 zurückabgebildet und über einen halbdurchlässigen Spiegel 4 auf den Eingangsspalt 7 einer spektraldispersiven Apparatur 5 gelenkt. Diese setzt die Wellenlängen-Information für jeden Punkt in eine Ortsinformation um, so daß sich am Ausgang der Apparatur 5 ein Profilbild der Oberfläche 3 ergibt, welches auf eine als Detektor benutzte Schwarz-Weiß-CCD-Flächen-Kamera 6 fällt, wie dies auch für Fig. 3 zutrifft.

Gegenüber dem in den Fig. 1, 3 gezeigten Prinzip der Auskopplung durch einen halbdurchlässigen Spiegel wird bei dem in Fig. 2 gezeigten Ausführungsbeispiel der erfindungsgemäßen Vorrichtung ein Durchlichtgitter 8 direkt an der Linse 2 angebracht, so daß dieses etwa die halbe Linsenfläche abdeckt.

Für beide Verfahren sind als dispersive Elemente Prismen, Gradsichtprismen und Gitter einsetzbar.

Als chromatisches Element (Linse 2) kann in vorteilhafter Weise eine Zonenplatte oder eine chromatisch nicht korrigierte Linse oder eine Kombination mehrerer Linsen zur Verstärkung des chromatischen Effektes benutzt werden.

Die Lichtquelle 1 kann durch ausgeleuchtete Spalte und, punktförmige Blenden oder geeignete Lichtleiter gebildet werden. Die Form der Lichtquelle kann ohne weiteres den Problemstellungen angepaßt werden. Neben der Verwendung eines Lichtstreifens gemäß Fig. 1, 2 kann es vorteilhaft sein, mehrere Lichtflächenelemente oder Lichtstreifen 10 oder mehrere Lichtpunkte 12 in einem gewünschten Meßraster zu verwenden. Beispielsweise können zwei Lichtpunkte 12 in geeignetem Abstand oder n Lichtpunkte auf den Ecken eines n-Ecks vorgesehen sein. Wenn das Profil der Oberfläche annähernd bekannt ist, ist es vorteilhaft, die einzelnen Lichtpunkte 12 oder Lichtflächenelemente (10) nicht in einer zur Hauptebene des Linsenelementes 10 parallelen Ebene anzuordnen, sondern für einzelne Lichtflächenelemente 10 unterschiedliche Abstände von der Linse 2 vorzusehen.

## Patentansprüche

1. Vorrichtung zum Messen von Abständen zwischen einem optischen Element (2) mit großer chromatischer Aberration und einem Gegenstand (S) mit einer aus mehreren Lichtpunkten gebildeten, weißes Licht aussendenden Lichtquelle (1), die derart angeordnet ist, daß das von ihr ausgehende Licht durch das optische Element (2) auf die Oberfläche (3) des Gegenstandes (S) abgebildet und teilweise reflektiert wird, und mit einer spektraldispersiven Apparatur (8), die derart angeordnet ist, daß sie von der Oberfläche reflektiertes, durch das optische Element hindurchgetretenes Licht empfängt und auf einer Empfangsoberfläche (6) abbildet,
dadurch gekennzeichnet,
daß das optische Element (2) als Linse ausgebildet ist und daß die spektraldispersive Apparatur aus einem transparenten Beugungsgitter (8) besteht, das derart an der Linse angebracht ist, daß es etwa die halbe Linsenfläche abdeckt, und das das empfangene reflektierte Licht gemäß den für die unterschiedlichen Wellenlängen charakteristischen Winkeln streut, wobei die seitlichen Ablenkungen für die Entfernungen der verschiedenen Teile des Oberflächenprofils des Gegenstandes (S) entlang der optischen Achse charakteristisch sind.

2. Vorrichtung nach Anspruch 1,
dadurch gekennzeichnet,
daß die Linse (2) wahlweise eine Glaslinse oder eine chromatische Linse vom Typ Zonenplatte ist, die konzentrische Beugungsringe aufweist, deren räumliche Frequenz in Richtung auf den Rand der Linse zunimmt.

3. Vorrichtung nach Anspruch 1,
dadurch gekennzeichnet,
daß die Empfangsoberfläche aus einem flachen CCD-Gitter (6) gebildet ist.

4. Vorrichtung nach Anspruch 1,
dadurch gekennzeichnet,
daß die Lichtpunkte mit unterschiedlichem Abstand zur Hauptebene des optischen Elementes angeordnet sind.

5. Vorrichtung nach Anspruch 1,
dadurch gekennzeichnet,
daß mehrere Lichtpunkte einer Lichtquelle (1) beliebig zueinander in einer Ebene angeordnet sind.

6. Vorrichtung nach Anspruch 5,
dadurch gekennzeichnet,
daß die Lichtpunkte auf einer Geraden, einem Dreieck, einem Rechteck bzw. auf den Eckpunkten eines beliebigen Polygons angeordnet sind.

7. Vorrichtung nach Anspruch 1,
dadurch gekennzeichnet,

daß die Lichtquelle (1) aus einem oder mehreren Lichtstreifen (10) gebildet ist, die durch Blenden erzeugt werden.

**Claims**

1. Device for measuring distances between an optical element (2) with large chromatic aberration and an object (S), with a light source (1) emitting white light formed by several light points, said light source being arranged such that the light which it emits is imaged onto the surface (3) of the object (S) by means of the optical element (2) and partly reflected, and with a spectral-dispersive apparatus (8) arranged in such a way that it receives light which has been reflected by the surface and has penetrated the optical element and images it on a receiving surface (6),
characterised in that
the optical element (2) is executed as a lens and that the spectral-dispersive apparatus consists of a transparent diffraction grating (8) which is attached to the lens in such a manner that it covers approximately half the lens area, and that the received reflected light scatters according to the angles characteristic of the various wavelengths, the lateral deflections being characteristic of the distances of the various parts of the surface profile of the object (S) along the optical axis.

2. Device according to Claim 1,
characterised in that
the lens (2) is arbitrarily a glass lens or a chromatic lens of zone plate type which exhibits concentric diffraction rings whose spatial frequency increases in the direction toward the edge of the lens.

3. Method according to Claim 1,
characterised in that
the receiving surface is formed by a flat CCD grating (6).

4. Device according to Claim 1,
characterised in that
the light points are arranged at different distances from the principal plane of the optical element.

5. Device according to Claim 1,
characterised in that
several light points of a light source (1) are arranged arbitrarily with respect to one another in one plane.

6. Device according to Claim 5,
characterised in that
the light points are arranged on a straight line, a triangle, a rectangle or at the corner points of an arbitrary polygon.

7. Device according to Claim 1,
characterised in that
the light source (1) is formed by one or more strips of light (10) which are generated by diaphragms.

**Revendications**

1. Dispositif de mesure des écarts entre un élément optique (2) à aberration chromatique élevée et un objet (S), à l'aide d'une source lumineuse (1) constituée de plusieurs points lumineux, émettant une lumière blanche, et qui est disposée de façon que la lumière en sortant est appliquée par l'élément optique (2) sur la surface (3) de l'objet (S) et est partiellement réfléchie, et à l'aide d'un appareillage (8) de dispersion spectrale, qui est disposé de façon qu'il reçoive la lumière réfléchie par la surface de l'objet et passant à travers l'élément optique, et l'applique sur une surface réceptrice (6), dispositif
caractérisé en ce que
l'élément optique (2) est réalisé sous la forme d'une lentille et en ce que l'appareillage de dispersion spectrale est constitué par une grille de diffraction (8) transparent qui est rapporté contre la lentille de façon qu'il recouvre à peu près la moitié de la surface de cette lentille, et qu'il disperse la lumière réfléchie reçue selon les angles caractéristiques pour les différentes longueurs d'onde, tandis que les déviations latérales sont caractéristiques des éloignements des différentes parties du profil superficiel de l'objet (S) le long de l'axe optique.

2. Dispositif selon la revendication 1,
caractérisé en ce que
la lentille (2) est au choix une lentille en verre ou une lentille chromatique du type lentille zonée, qui comporte des anneaux de diffraction concentriques dont la fréquence spatiale décroît en allant vers le bord de la lentille.

3. Dispositif selon la revendication 1,

caractérisé en ce que

la surface réceptrice est constituée par un réseau CCD (6).

4. Dispositif selon la revendication 1,

caractérisé en ce que

les points lumineux sont à des distances différentes du plan principal de l'élément optique.

5. Dispositif selon la revendication 1,

caractérisé en ce que

plusieurs points d'une source lumineuse (1) sont disposés de façon quelconque entre eux dans un plan.

6. Dispositif selon la revendication 5,

caractérisé en ce que

les points lumineux sont disposés sur une droite, un triangle, un rectangle ou bien aux sommets d'un polygone quelconque.

7. Dispositif selon la revendication 1,

caractérisé en ce que

la source lumineuse (1) est constituée par une ou plusieurs bandes lumineuses (10) qui sont obtenues grâce à des diaphragmes.

Fig. 1

Fig. 2

Fig. 3